Europäisches Patentamt

European Patent Office

Office européen des brevets

(19)

(11) Veröffentlichungsnummer: **0 038 956**
**B1**

(12) # EUROPÄISCHE PATENTSCHRIFT

(45) Veröffentlichungstag der Patentschrift:
**27.08.86**

(51) Int. Cl.⁴: **B 60 T 7/12**

(21) Anmeldenummer: **81102510.5**

(22) Anmeldetag: **03.04.81**

(54) Verfahren und Vorrichtung zum weggenauen Abbremsen spurgebundener Fahrzeuge.

(30) Priorität: **25.04.80 DE 3016081**

(43) Veröffentlichungstag der Anmeldung:
**04.11.81 Patentblatt 81/44**

(45) Bekanntmachung des Hinweises auf die Patenterteilung:
**27.08.86 Patentblatt 86/35**

(84) Benannte Vertragsstaaten:
**AT CH DE FR GB LI SE**

(56) Entgegenhaltungen:
**DE - A - 2 708 361**
**US - A - 3 245 728**
**US - A - 3 639 754**

(73) Patentinhaber: **KNORR-BREMSE AG, Moosacher Strasse 80 Postfach 401060, D-8000 München 40 (DE)**
Patentinhaber: **Siemens Aktiengesellschaft Berlin und München, Wittelsbacherplatz 2, D-8000 München 2 (DE)**

(72) Erfinder: **Gerum, Eduard, Dr., Strassbergerstrasse 32, D-8000 München 40 (DE)**
Erfinder: **Kessel, Gerd, Dr., Parksiedlung 8, D-8031 Geiselbullach (DE)**
Erfinder: **Gotthardt, Klaus-Jürgen, Auracher Strasse 10, D-8521 Untermembach (DE)**
Erfinder: **Lichtenstein, Lothar, Ebnerstrasse 13, D-8520 Erlangen (DE)**

## Beschreibung

Die Erfindung bezieht sich auf ein Verfahren zum weggenauen Abbremsen spurgebundener Fahrzeuge, bei dem die Fahrzeuggeschwindigkeit nach einer vorgegebenen Funktion geregelt wird, indem die Differenz zwischen tatsächlicher Fahrzeuggeschwindigkeit und einer aus der vorgegebenen Funktion ermittelten Sollgeschwindigkeit einer die Bremskraft des Fahrzeugs regelnden Einrichtung zugeführt wird, wobei die vorgegebene Funktion eine wegabhängige Phase konstanter Verzögerung und eine Phase abnehmender Verzögerung aufweist.

Weiterhin bezieht sich die Erfindung auf eine Vorrichtung zur Durchführung des Verfahrens, bei der ein Sensor vorgesehen ist, der fahrzeuggeschwindigkeits-proportionale Signale erzeugt, weiterhin ein Rechner, der Sollwerte für die Fahrzeuggeschwindigkeit abgibt, eine Einrichtung, die für einen weichen Übergang der Sollgeschwindigkeit bei Annäherung an die Zielgeschwindigkeit sorgt, sowie eine die Bremskraft des Fahrzeuges regelnde Einrichtung.

Ein derartiges Verfahren bzw. eine solche Vorrichtung ist aus der DE-A-2 708 361 bekanntgeworden. Dort wird zur automatischen Zielbremsung ein Rechner eingesetzt, der in Abhängigkeit des noch zurückzulegenden Weges, d.h. vom augenblicklichen Fahrzeugort bis zum Zielpunkt, wo das Fahrzeug zum Halten gekommen sein soll bzw. eine gewünschte Zielgeschwindigkeit (z.B. bei einer Langsamfahrstrecke) angenommen haben soll, die jeweils nötige Sollgeschwindigkeit berechnet. Es wird dort mit einer konstanten Verzögerung gearbeitet, so dass sich als Geschwindigkeits-Weg-Funktion die bekannte «Bremsparabel» ergibt. Nach einem Bremsbefehl vergleicht ein Geschwindigkeitsregler die tatsächliche Fahrzeuggeschwindigkeit mit der durch die Bremswegparabel vorgegebenen Sollgeschwindigkeit und regelt je nach Abweichung zwischen Soll- und Istwert die Bremskraft. Da unter der Voraussetzung einer konstanten Fahrzeugverzögerung die «Bremsparabel», d.h. die Funktion der Fahrzeuggeschwindigkeit längs des Bremsweges, leicht zu ermitteln ist, kann eine weggenaue Geschwindigkeitsregelung in Abhängigkeit von der Entfernung zum Zielort durchgeführt werden.

Allerdings ist die Verwendung einer konstanten Verzögerung ungünstig, da beispielsweise ein «Halteruck» durch die plötzliche Abschaltung des Verzögerungssollwertes auftritt bzw. das Fahrzeug nicht «weich» in eine vorgegebene Zielgeschwindigkeit einläuft. Dies führt auch zu starker Beanspruchung der Kupplungen eines Eisenbahnzuges und vermindert den Fahrkomfort.

Aus diesem Grunde wurde in der DE-A-2 708 361 bereits vorgeschlagen, kurz vor Erreichen des Zielpunktes als Führungsgrösse für die Regelung die Zielgeschwindigkeit zu verwenden (die auch «0» sein kann). Es findet also eine Umschaltung des Sollwertes zwischen dem Ausgang des Rechners und einem Geber für die Zielgeschwindigkeit statt. Um diesen Übergang «weicher» zu gestalten, ist am Rechnerausgang ein Kondensator vorgesehen, der sich nach Abschalten des Rechners langsam auf den neuen Sollwert (Zielgeschwindigkeit) entlädt.

Nachteilig an diesem bekannten Verfahren ist die Tatsache, dass eine weggenaue Vorgabe des Geschwindigkeitssollwertes nur so lange erfolgen kann, wie mit konstanter Verzögerung gearbeitet wird. Nach Umschalten auf geringere bzw. abnehmende Verzögerung (Auslauf) ist eine weggenaue Regelung nicht mehr möglich, da die Geschwindigkeits-Weg-Funktion nun nicht mehr die bekannte «Bremsparabel» ist. Es lässt sich nachweisen, dass die Geschwindigkeits-Weg-Funktion bei veränderlicher Verzögerung nicht mehr geschlossen darstellbar ist, da alle integrierbaren Gleichungen der Geschwindigkeit als Funktion des Weges sich entweder nur nach unendlich langem Weg bei Zielgeschwindigkeiten grösser «0» oder nach unendlich langer Zeit bei Haltebremsungen lösen lassen, d.h. die Zielgeschwindigkeit erreichen. Alle Gleichungen als Funktion der Zeit, die in endlicher Zeit die Zielgeschwindigkeit erreichen, sind analytisch nicht als Funktion des Weges darzustellen. Folglich ist beim Stand der Technik während der Phase abnehmender Verzögerung eine weggenaue Regelung nicht möglich. Hierdurch ist auch die Genauigkeit einer Zielbremsung verringert, da Wegfehler während des Auslaufs nicht mehr korrigiert werden können.

Dies ist insbesondere bei Steigungen, Gefällen oder Langsamfahrstellen von Nachteil, wo grössere Wegfehler auftreten.

Weitere automatische Zielbremseinrichtungen (DE-OS-2 648 509, DE-AS-1 018 448) arbeiten ebenfalls mit konstanter Verzögerung, was die obengenannten Nachteile bringt.

Aufgabe der vorliegenden Erfindung ist es daher, ein Verfahren bzw. eine Vorrichtung der eingangs genannten Art zu schaffen, bei dem bzw. bei der eine weggenaue Regelung auch in einer Phase sich ändernder Fahrzeugverzögerung durchführbar ist, und wobei ein hoher Fahrkomfort (geringer Ruck) erhalten wird.

Diese Aufgabe wird durch die im Patentanspruch 1 bzw. 7 angegebenen Merkmale gelöst. Vorteilhafte Ausgestaltungen und Weiterbildungen der Erfindung sind den Unteransprüchen zu entnehmen.

Der Grundgedanke der Erfindung liegt darin, dass während des Auslaufes, d.h. bei abnehmender Verzögerung, der ab Bremsbeginn zurückgelegte Sollweg als Funktion einer fiktiven Zeit, die nicht mit der tatsächlich verstrichenen Bremszeit übereinstimmt, ermittelt wird. Dieser Sollweg wird mit dem tatsächlich ab Bremsbeginn zurückgelegten Weg verglichen. Zeigt dieser Vergleich eine Abweichung zwischen Istweg und Sollweg an, so sind Wegfehler bei der Bremsung aufgetreten. Hierauf wird die fiktive Zeit modifiziert, d.h. je nach Vorzeichen (und Grösse) der Wegabweichung wird die zuerst gewählte fiktive Zeit um einen bestimmten geringfügigen Betrag vergrössert oder verkleinert. Mit dieser neuen fiktiven Zeit wird erneut der Sollwert für den Weg berechnet. Dieser Vorgang wird solange wiederholt, bis die Abweichung zwischen Istwert und Sollwert unter eine vorgegebene Grösse (beispielsweise 0,5 m) gebracht wurde. Mit der zu diesem Sollwert gehörenden fiktiven Zeit wird dann der Sollwert für die Geschwindigkeit ermittelt und zur weiteren Regelung verwendet.

Da die obengeschilderten Vorgänge sehr schnell ablaufen, kann quasi-kontinuierlich der Sollwert für die Geschwindigkeit als Funktion des zurückgelegten Weges ermittelt werden.

Von Vorteil wird während des Auslaufes ein zeitlich linear abnehmender Verzögerungssollwert verwendet. Durch zweifache Integration nach der Zeit ergibt sich daraus der Weg als Funktion der Zeit ($s = f(t)$), was im vorliegenden Falle ein Polynom dritten Grades von t ergibt. Die Gleichung für die Berechnung des Sollweges ($s_{ab1}$) in Abhängigkeit von der fiktiven Zeit (TAB) lautet dann wie folgt:

$$S_{ab1} = B_{soll1} \left( \frac{TAB^3}{6TABO} - \frac{TAB^2}{2} + \frac{TAB \cdot TABO}{2} \right) + V_{ziel} \cdot TAB, \qquad (1)$$

wobei $B_{soll1}$ ein modifizierter Verzögerungssollwert, TABO die Zeitdauer während der sich die Verzögerung von $B_{soll1}$ auf Null ändert und $v_{ziel}$ die gewünschte Zielgeschwindigkeit ist.

Sofern der Sollweg $s_{ab1}$ innerhalb bestimmter vorgegebener Grenzen mit dem tatsächlich zurückgelegten Weg $s_{abef}$ übereinstimmt, lässt sich mit der zur Bestimmung dieses Sollweges verwendeten fiktiven Zeit der Sollwert für die Geschwindigkeit ($v_{soll}$) wie folgt ermitteln:

$$V_{soll} = B_{soll1} \left( \frac{TAB^2}{2TABO} - TAB + \frac{TABO}{2} \right) + V_{ziel}, \qquad (2)$$

wobei die verwendeten Grössen oben definiert wurden.

Da die ermittelte Sollgeschwindigkeit ($v_{soll}$) eine Funktion derjenigen fiktiven Zeit ist, bei der der Sollweg mit dem tatsächlich zurückgelegten Istweg innerhalb vorgegebener Toleranzen übereinstimmt, ist die Sollgeschwindigkeit innerhalb entsprechender Toleranzen eine Funktion des tatsächlich zurückgelegten Weges.

Es ist ersichtlich, dass hiermit auch während des Auslaufs, d.h. bei nicht-konstanter Verzögerung, nunmehr eine weggenaue Regelung durchgeführt werden kann.

Um einen weichen Übergang zur Zielgeschwindigkeit zu erhalten, wird innerhalb eines bestimmten Weges vor Erreichen des Zielpunktes, beispielsweise innerhalb der letzten 10 m der Geschwindigkeitssollwert gleich der Zielgeschwindigkeit gesetzt, wie beim Stand der Technik bekannt.

Nach einer weiteren vorteilhaften Ausgestaltung der Erfindung wird auch der Übergang zwischen der Phase konstanter Verzögerung und der Phase abnehmender Verzögerung «weich» gestaltet. Bei Haltebremsungen und Zielgeschwindigkeiten unter 50 km/h beobachtet man bei automatischer Bremsung kurz vor Erreichen der Bremskraftabbauphase bei Fahrzeugen mit generatorischer und pneumatischer Bremse eine stärkere Verzögerungswirkung der pneumatischen Bremse. Dies rührt von dem geschwindigkeitsbedingten Abbau der generatorischen Bremse her, die der Regler als Geschwindigkeits- und/oder Verzögerungsabweichung erkennt und durch verstärkten Einsatz der pneumatischen Bremse kompensiert. Dieses an sich normale Verhalten ist kurz vor der Bremskraftabbauphase von Nachteil, da von einem unnötig vergrösserten Wert der Bremskraft aus dieser verringert wird. Den weichen Übergang erhält man dadurch, dass kurz vor Erreichen der Bremskraftabbauphase dem Regler ein Anreiz in Richtung «Lösen» gegeben wird. Dies geschieht dadurch, dass von der Reglerführungsgrösse (beispielsweise der Sollgeschwindigkeit oder dem Soll-Vorsteuerdruck) ein konstanter Betrag subtrahiert wird, so dass der Sollwert in Richtung «Bremse lösen» verfälscht wird. Dies führt zu einem ruhigeren Regelverhalten mit geringeren Regelabweichungen. Der Zeitpunkt des Beginns der Bremskraftabbauphase lässt sich aus der Zielentfernung oder dem Abstand zur Zielgeschwindigkeit ermitteln.

Im folgenden wird die Erfindung anhand eines Ausführungsbeispieles im Zusammenhang mit den Figuren ausführlich erläutert.
Es zeigt

Fig. 1 ein Diagramm der Fahrzeuggeschwindigkeit (v) und der Fahrzeugverzögerung (b) in Abhängigkeit von dem zurückgelegten Weg (s);

Fig. 2 ein Blockschaltbild eines Geschwindigkeitsreglers, der bei der Erfindung zur Anwendung kommt; und

Fig. 3 ein detailliertes Blockschaltbild eines Rechenschaltkreises zur Ermittlung des Sollwertes der Geschwindigkeit in Abhängigkeit vom Bremsweg.

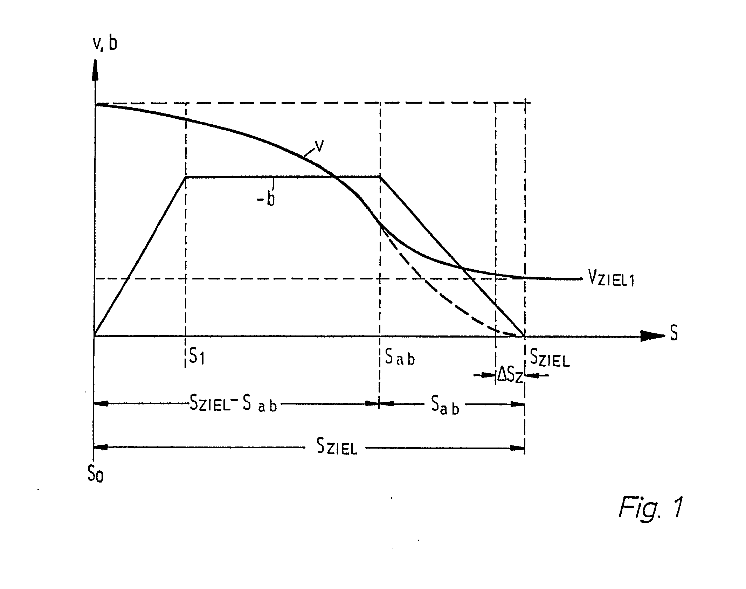

In Fig. 1 ist ein typischer Verlauf der Beschleunigung dargestellt. An einem Wegpunkt $S_0$ (Bremsbeginn) wird die Verzögerung linear bis zu einem Wegpunkt $s_1$ erhöht. Während dieser Zeit wird die Bremskraft aufgebaut. (Zeitverzögerungen der pneumatischen Bremse seien hierbei vernachlässigt.)

Anschliessend wird die Verzögerung bis zu einem Wegpunkt $s_{ab}$ konstant gehalten und von dem Wegpunkt $s_{ab}$ bis zum Zielort $S_{ziel}$ linear abgebaut.

Der entsprechende Geschwindigkeitsverlauf v zeigt, dass während der Bremskraftaufbauphase (s0–s1) der Bremsverlauf noch nicht exakt der «Bremsparabel» folgt. Während der Phase konstanter Verzögerung ($s_1$–$s_{ab}$) folgt die Fahrzeuggeschwindigkeit der bekannten «Bremsparabel». Während des Auslaufes ($s_{ab}$–$s_{ziel}$) geht der Ge-

schwindigkeitsverlauf «weich» in die Zielgeschwindigkeit über. Die durchgezogene Linie zeigt den Fall einer «Langsamfahrstelle» während die gestrichelte Linie den Fall einer Haltebremsung zeigt, bei der die Zielgeschwindigkeit «0» ist. Kurz vor Erreichen des Zielpunktes, d.h. in einer Entfernung $\Delta s_z$ (beispielsweise 10 m) wird, wie oben erwähnt, die Zielgeschwindigkeit als Führungsgrösse, d.h. als Sollwert verwendet.

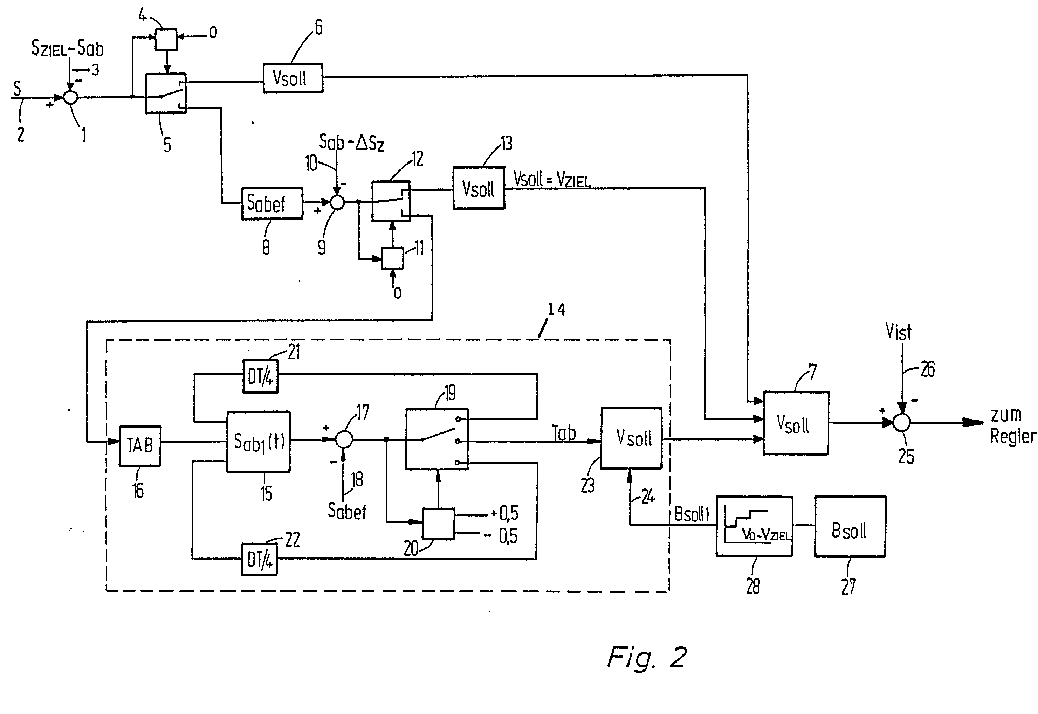

Dem in Figur 2 dargestellten Geschwindigkeitsregler werden von einem Subtrahierer 1 über Leitungen 2 und 3 Signale zugeführt, die dem tatsächlich zurückgelegten Weg s ab Bremsbeginn ($s_0$) bzw. der Entfernung zum Verzögerungsabbau $s_{ab}$, d.h. dem Wert $s_{ziel} - s_{ab}$ entsprechen. Der Ausgang des Subtrahierers 1 wird einem Komparator 4, 5 zugeführt, der je nachdem ob das Ausgangssignal des Subtrahierers positiv oder negativ war, das Eingangssignal auf eine von zwei verschiedenen Leitungen ausgibt. Der Komparator besteht aus einem Vergleicher 4, der das Eingangssignal mit dem Wert «0» vergleicht und in Abhängigkeit von dem Vergleich einen Umschalter 5 steuert. Ist das Ausgangssignal des Subtrahierers 1 kleiner «0», d.h. dass der Wegpunkt $s_{ab}$ noch nicht erreicht wurde, so wird der Umschalter 5 so gesteuert, dass der Subtrahierer 1 mit einem Sollwertgeber 6 verbunden wird. Der Sollwertgeber 6 ermittelt in Abhängigkeit von dem ab Bremsbeginn zurückgelegten Weg die «Bremsparabel» und gibt entsprechende Signale an eine ODER-Schaltung 7 ab.

Ist der Beschleunigungsumschaltpunkt $s_{ab}$ erreicht, so wird das Ausgangssignal des Subtrahierers 1 positiv und der Umschalter 5 wird so gesteuert, dass der Subtrahierer 1 mit einem Istwertgeber 8 verbunden wird, an dessen Ausgang der Istbremsweg während des Auslaufes, d.h. der ab dem Punkt $s_{ab}$ zurückgelegte Weg $s_{abef}$ ausgegeben wird.

Dieser Wert wird einem Subtrahierer 9 zugeführt, dessen subtrahierendem Eingang über eine Leitung 10 ein Wert $s_{ab} - \Delta s_z$ zugeführt wird. Der Ausgang des Subtrahierers 9 wird einem weiteren Komparator 11, 12 zugeführt, der in gleicher Weise aufgebaut ist wie der Komparator 4, 5. Ist das Ausgangssignal des Subtrahierers 9 grösser «0», so befindet sich das Fahrzeug in einem Abstand kleiner $\Delta s_z$ vom Zielpunkt und der Ausgang des Subtrahierers 9 wird mit einem Sollwertgeber 13 verbunden. Der Sollwertgeber 13 gibt als Sollwert die gewünschte Zielgeschwindigkeit $v_{ziel}$ aus, die der ODER-Schaltung 7 zugeführt wird.

Ist das Ausgangssignal des Subtrahierers 9 kleiner «0», so befindet sich das Fahrzeug in der Auslaufstrecke und das Ausgangssignal des Subtrahierers 9 aktiviert eine Rechenschaltung 14.

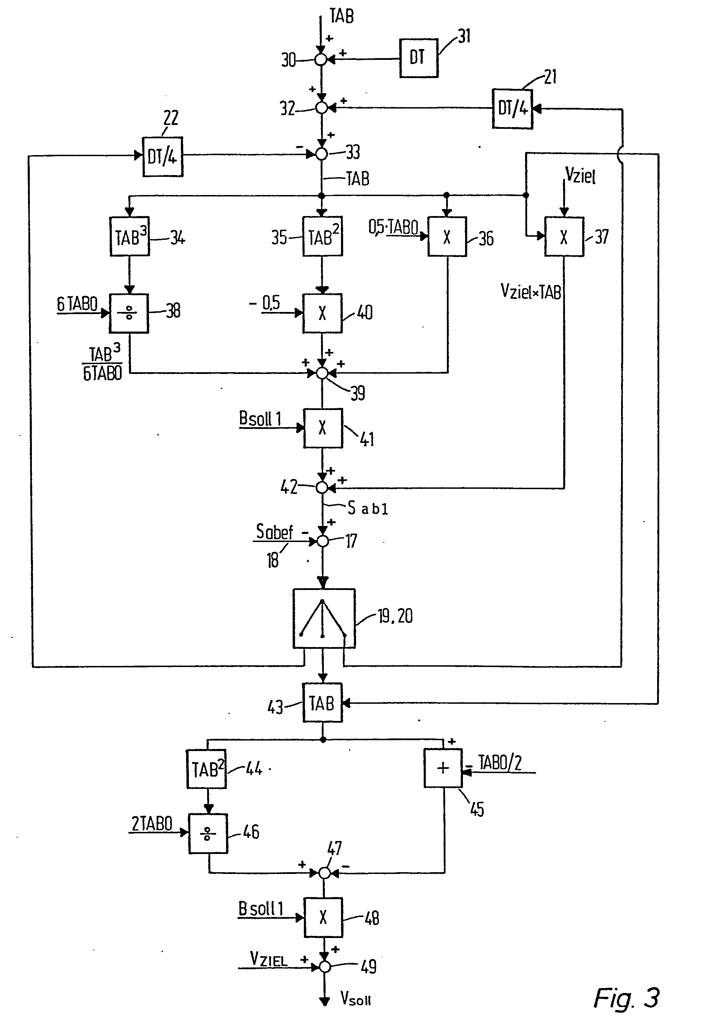

Die Rechenschaltung 14 enthält einen Geber 16 für die fiktive Zeitgrösse TAB. Diese Grösse wird einer Rechenschaltung 15 zugeführt, in der der Sollwert $s_{ab1}$ als Funktion der fiktiven Grösse TAB berechnet wird. Wie aus Figur 3 zu ersehen, benötigt die Rechenschaltung 14 als weitere Eingangsgrössen noch den Verzögerungssollwert $B_{soll1}$, die Zielgeschwindigkeit $v_{ziel}$ sowie eine konstante Grösse TABO, die oben definiert wurde. Am Ausgang der Rechenschaltung 15 erscheint dann die Grösse $s_{ab1}$ als Funktion der fiktiven Zeitgrösse TAB. Diese Grösse wird einem Subtrahierer 17 zugeführt, dessen subtrahierendem Eingang über eine Leitung 18 die Grösse $s_{abef}$ aus dem Istwertgeber 8 zugeführt wird. Der Ausgang des Subtrahierers 17 wird einem Komparator 19, 20 zugeführt. Dort wird überprüft, ob die Differenz zwischen $s_{ab1}$ und $s_{abef}$ innerhalb bestimmter Bereiche liegt. Ist diese Differenz grösser als ein vorbestimmter Wert von beispielsweise $+0,5$ m, so steuert ein Vergleicher 20 den Umschalter 19 so, dass ein Geber 22 aktiviert wird. Ist die Differenz dagegen kleiner als ein vorgegebener negativer Wert, beispielsweise $-0,5$ m, so wird über den Komparator 19, 20 ein Geber 21 aktiviert. Liegt dagegen die Differenz innerhalb des Intervalles zwischen dem positiven und dem negativen Wert, d.h. beispielsweise zwischen $-0,5$ m und $+0,5$ m, so wird über den Komparator 19, 20 eine weitere Rechenschaltung 23 aktiviert.

Ist der Geber 21 aktiviert, so wird die fiktive Grösse TAB vergrössert, indem zu dem bisherigen TAB ein kleiner Betrag von z.B. DT/4 hinzu addiert wird. Wird der Geber 22 aktiviert, so wird das bisherige TAB verkleinert, indem von ihm eine entsprechende Grösse von z.B. DT/4 subtrahiert wird. Die Rechenschaltung 15 ermittelt dann mit dem modifizierten TAB einen neuen Sollwert $s_{ab1}$, solange, bis die Differenz zwischen $s_{ab1}$ und $s_{abef}$ innerhalb des vorgegebenen Intervalles liegt. In diesem Falle war die fiktive Grösse TAB innerhalb zulässiger Toleranzen richtig bestimmt, so dass mit dieser Grösse in der Rechenschaltung 23 die Sollgeschwindigkeit $v_{soll}$ als Funktion dieses TAB berechnet werden kann. Da die Grösse TAB durch den Iterationsprozess so ermittelt wurde, dass die Abweichung zwischen Sollweg und Istweg innerhalb zulässiger Grenzen liegt, ist die Ausgangsgrösse der Rechenschaltung 23 mit hinreichender Genauigkeit eine Funktion des Weges.

Die Sollverzögerung $B_{soll1}$ wird dadurch erzeugt, dass ein Sollwertgeber 27 die in Figur 1 gezeigte Verzögerung vorgibt. Um eine weichere Regelung zu erhalten, wird diese Grösse in Abhängigkeit der Differenz von Ausgangsgeschwindigkeit bei Bremsbeginn zu Zielgeschwindigkeit modifiziert, in der Weise, dass bei kleiner Differenz der Sollwert verringert wird. Dies kann linear oder in Stufen vorgenommen werden, wie beispielsweise in dem Block 28 gezeigt.

Die Ausgangsgrösse der Rechenschaltung 23 wird ebenfalls der ODER-Schaltung 7 zugeführt.

Der Ausgang der ODER-Schaltung 7 gibt den jeweils aktuellen Geschwindigkeitssollwert an einen Subtrahierer 25 aus, dessen subtrahierendem Eingang über eine Leitung 26 die Istgeschwindigkeit $v_{ist}$ zugeführt wird. Das Ausgangssignal des Subtrahierers 25 stellt dann die Regelabweichung dar, die für die weitere Regelung verwendet wird.

Da die Ermittlung der Sollgeschwindigkeit in dem Rechenschaltkreis 14 endliche Zeit dauert, d.h. eine Taktzeit DT, muss für die fiktive Zeit TAB laufend korrigiert werden. Dies geschieht dadurch, dass unabhängig von der Aktivierung der Geber 21 oder 22 dem jeweils vorhergehenden Wert von TAB ein Wert der Grösse DT hinzu addiert wird.

In gleicher Weise wird dem Istwertgeber 8 ein Korrekturglied addiert, das der Wegstrecke entspricht, die während der Rechenzeit DT durchlaufen wird. Dieses Korrekturglied entspricht damit dem Produkt aus DT mal der Istgeschwindigkeit $v_{ist}$.

Das dem Geber 16 von dem Umschalter 12 zugeführte Steuersignal kann weiterhin dazu verwendet werden, eine Istwertverfälschung beispielsweise an dem Subtrahierer 25 oder an dem nachgeschalteten, nicht dargestellten Regler vorzunehmen, so dass zu Beginn der Auslaufphase ein weicherer Übergang der Verzögerung erreicht wird. Soll dieser Übergang vor dem Wegpunkt $s_{ab}$ bereits einsetzen, so kann eine weitere Einrichtung ähnlich den Bauelementen 9 bis 12 vorgesehen werden, mit denen der Beginn dieses weicheren Überganges festgelegt wird. Es muss lediglich die Eingangsgrösse, die der der Leitung 10 entsprechenden Leitung angelegt wird, modifiziert werden.

In Figur 3 ist ein detaillierteres Blockschaltbild der Rechenschaltung 14 dargestellt. Die Ausgangsgrösse TAB des Gebers 16 wird einem Addierer 30 zugeführt, dessen anderem Eingang eine der Rechenzeit DT entsprechende Grösse aus einem Geber 31 zugeführt wird. Der Ausgang des Addierers 30 ist mit einem Eingang eines weiteren Addierers 32 verbunden, dessen anderer Eingang mit dem Geber 21 für die Grösse DT/4 verbunden ist. Der Ausgang des Addierers 32 ist mit einem Eingang eines Subtrahierers 33 verbunden, dessen subtrahierender Eingang mit dem Geber 22 verbunden ist. Der Ausgang des Subtrahierers 33 führt ein Signal, das der jeweils aktuellen fiktiven Grösse TAB entspricht. Diese Grösse wird vier Multiplizierschaltungen 34, 35, 36 und 37 zugeführt. In der Multiplizierschaltung 34 wird die dritte Potenz der Grösse TAB, d.h. $TAB^3$ erzeugt. In der Multiplizierschaltung 35 wird das Quadrat der Grösse TAB erzeugt. In der Multiplizierschaltung 36 wird die Grösse TAB mit der Grösse $0,5 \cdot TABO$ multipliziert. In der Multiplizierschaltung 37 wird die Grösse $v_{ziel} \cdot TAB$ gebildet.

Der Ausgang der Multiplizierschaltung 34 ist mit einem Dividierer 38 verbunden, dessen anderem Eingang die Grösse 6 TABO zugeführt wird, so dass der Ausgang des Dividierers 38 die Grösse $TAB^3/6TABO$ führt.

Der Ausgang des Dividierers 38 ist mit einem Addierer 39 verbunden. Der Ausgang der Multiplizierschaltung 35 ist mit einem weiteren Multiplizierer 40 verbunden, dessen anderem Eingang der konstante Wert 0,5 zugeführt wird. Der Ausgang des Multiplizierers 40 ist mit einem weiteren Eingang des Addierers 39 verbunden. Ebenfalls ist der Ausgang der Multiplizierschaltung 36 mit einem weiteren Eingang des Addierers 39 verbunden. Der Ausgang des Addierers 39 ist mit einem Multiplizierer 41 verbunden, dessen anderem Eingang die Grösse $B_{soll1}$ (Block 28 aus Figur 2) zugeführt wird. Der Ausgang des Multiplizierers 41 ist mit einem Addierer 42 verbunden, dessen anderem Eingang der Ausgang der Multiplizierschaltung 37 zugeführt wird. Der Ausgang des Addierers 42 führt dann die Grösse $s_{ab1}$. Diese Grösse wird dem Subtrahierer 17 zugeführt, wie oben beschrieben. Die Ausgangsgrösse des Subtrahierers 17 wird dem Komparator 19, 20 zugeführt, der beispielsweise ein «Fensterdiskriminator» sein kann. Je nachdem, in welchem der untersuchten Bereiche, d.h. grösser +DS, kleiner −DS oder von +DS bis −DS, liegt, wird der Geber 21, 22 oder ein Schalter 43 aktiviert. Werden die Geber 21 oder 22 aktiviert, so wird die Grösse TAB modifiziert, indem in dem Addierer 32 bzw. dem Subtrahierer 33 die entsprechende Addition bzw. Subtraktion durchgeführt wird. Dieser Rechenablauf kann innerhalb der Taktzeit DT mehrfach durchgeführt werden, so dass innerhalb jeder Taktzeit der exakte Wert von TAB ermittelt wird. Nach Ablauf der Taktzeit DT wird ein neuer Wert von TAB durch Addition von DT für den nächsten Rechenvorgang festgelegt.

Liegt die Ausgangsgrösse des Subtrahierers 17 innerhalb des «Fensters» zwischen +DS und −DS so wird der Schalter 43 so betätigt, dass an seinem Ausgang die aktuelle Grösse von TAB erscheint. Der Ausgang des Schalters 43 ist mit einem Quadrierer 44 und mit einem Subtrahierer 45 verbunden. Der Ausgang des Quadrierers 44 ist mit einem Dividierer 46 verbunden, dessen Divisionseingang die Grösse 2TABO zugeführt wird, so dass an seinem Ausgang die Grösse $TAB^2/2 \cdot TABO$ erscheint. Der Ausgang des Dividierers 46 ist mit dem positiven Eingang eines Subtrahierers 47 verbunden. Dem subtrahierenden Eingang des Subtrahierers 45 wird die Grösse TABO/2 zugeführt. Der Ausgang des Subtrahierers 45 ist mit dem subtrahierenden Eingang des Subtrahierers 47 verbunden. Der Ausgang des Subtrahierers 47 ist mit einem Multiplizierer 48 verbunden, dessen anderem Eingang die Grösse $B_{soll1}$ zugeführt wird. Der Ausgang des Multiplizierers 48 ist mit einem Eingang eines Addierers 49 verbunden, dessen anderem Eingang die Grösse $v_{ziel}$ zugeführt wird. Am Ausgang des Addierers 49, der dem Ausgang der Rechenschaltung 14 entspricht, erscheint dann die Grösse $v_{soll}$, die von dort der ODER-Schaltung 7 (Figur 2) zugeführt wird.

Abschliessend sei noch darauf hingewiesen, dass die Rechenzeit DT relativ klein ist, so dass der Iterationsvorgang für die Ermittlung der Grösse TAB sehr schnell erfolgt und letztlich der Sollwert $v_{soll}$ quasi-kontinuierlich angegeben wird.

**Patentansprüche**

1. Verfahren zum weggenauen Abbremsen spurgebundener Fahrzeuge, bei dem die Fahrzeuggeschwindigkeit nach einer vorgegebenen Funktion geregelt wird, indem die Differenz zwischen tatsächlicher Fahrzeuggeschwindigkeit und einer aus der vorgegebenen Funktion ermittelten Sollgeschwindigkeit einer die Bremskraft des Fahrzeuges regelnden Einrichtung zugeführt wird, wobei die vorgegebene Funktion eine wegabhängige Phase konstanter Verzögerung und eine Phase abnehmender Verzögerung aufweist, dadurch gekennzeichnet, dass die vorgegebene Funktion in der Phase abnehmender Verzögerung wegabhängig ist und dass die vorgegebene Funktion ($v_{soll} = f(s)$) durch Vorgabe einer fiktiven Zeit (TAB) so erzeugt wird, dass zuerst bei der Sollgeschwindigkeit ($v_{soll} = f(TAB)$) der durchfahrene Sollweg ($S_{soll} = f(TAB)$) ab Bremsbeginn ermittelt wird, dann dieser Sollweg mit dem tatsächlich durchfahrenen Weg ($s_{ist}$) verglichen wird, dann in Abhängigkeit von diesem Vergleich die fiktive Zeit (TAB) modifiziert und der Sollweg erneut ermittelt wird, bis der Sollweg ($s_{soll} = f(TAB)$) innerhalb vorgegebener Grenzen mit dem Istweg ($s_{ist}$) übereinstimmt und dann mit der zuletzt modifizierten fiktiven Zeit (TAB) die Sollgeschwindigkeit ($v_{soll} = f(s)$) als Funktion des Weges ermittelt wird.

2. Verfahren nach Anspruch 1, dadurch gekennzeichnet, dass die Modifikation der fiktiven Zeit (TAB) so erfolgt, dass in Abhängigkeit von dem Vergleich ein konstanter kleiner Betrag (DT/4) zu der fiktiven Zeit (TAB) addiert wird oder von ihr subtrahiert wird.

3. Verfahren nach den Ansprüchen 1 oder 2, dadurch gekennzeichnet, dass zur Ermittlung der vorgegebenen Funktion ($v_{soll} = f(s)$) verwendete Verzögerungssollwert in Abhängigkeit von der Differenz der Fahrzeuggeschwindigkeit zur Zielgeschwindigkeit ($v_{ziel}$) derart mit einem Faktor modifiziert wird, dass der Verzögerungssollwert bei kleiner Differenz kleiner ist als bei grösserer Differenz.

4. Verfahren nach den Ansprüchen 1 bis 3, dadurch gekennzeichnet, dass der Verzögerungssollwert in der Phase abnehmender Verzögerung linear mit der Zielentfernung verläuft.

5. Verfahren nach den Ansprüchen 1 bis 4, dadurch gekennzeichnet, dass bei einer Zielentfernung, die kleiner als ein vorgegebener Wert ist, die gewünschte Zielgeschwindigkeit ($v_{ziel}$) als Sollwert für die Geschwindigkeitsregelung verwendet wird.

6. Verfahren nach Anspruch 5, dadurch gekennzeichnet, dass der vorgegebene Wert einer Zielentfernung von etwa 10 m entspricht.

7. Vorrichtung zum weggenauen Abbremsen spurgebundener Fahrzeuge mit einem Sensor, der der Fahrzeuggeschwindigkeit proportionale Signale erzeugt, mit einem Rechner, der Sollwerte für die Fahrzeuggeschwindigkeit erzeugt, mit einer Einrichtung, die für einen weichen Übergang der Sollgeschwindigkeit bei Annäherung an die Zielgeschwindigkeit sorgt und mit einer die Bremskraft des Fahrzeuges regelnden Einrichtung, dadurch gekennzeichnet, dass ein weiterer Rechner (14) für den Sollwert $v_{soll} = f(s)$ vorgesehen ist, der dann in Funktion tritt, wenn eine bestimmte Zielentfernung ($s_{ziel}$–$s_{AB}$) erreicht wurde, und der folgendes enthält:

Einen Rechenschaltkreis (15), der nach einer fest vorgegebenen Funktion aus einer vorgegebenen Grösse (TAB) einen Sollwert ($s_{soll} = f(TAB)$) für den seit Bremsbeginn zurückgelegten Sollweg ausgibt; einen Vergleicher (17, 19, 20) der den

Sollwert ($s_{soll} = f(TAB)$) mit dem tatsächlich zurückgelegten Weg ($s_{ist}$) vergleicht und in Abhängigkeit von dem Vergleich Steuersignale abgibt, die Modifizierschaltkreise (21, 22) betätigen, mit denen die vorgegebene Grösse (TAB) modifiziert wird bzw. bei Übereinstimmung zwischen Sollwert und Istwert innerhalb eines vorgegebenen Bereiches einen weiteren Rechenschaltkreis (23) aktiviert, der aus der vorgegebenen Grösse (TAB) einen Sollwert ($v_{soll} = f(TAB)$) für die Geschwindigkeit erzeugt.

8. Vorrichtung nach Anspruch 7, dadurch gekennzeichnet, dass die Modifizierschaltkreise (21, 22) Grössen ($\pm$ DT/4) enthalten, die je nachdem, ob bzw. welcher der Modifizierschaltkreise aktiviert ist, in dem Rechenschaltkreis (15) zur vorgegebenen Grösse (TAB) addiert werden.

9. Verfahren nach einem oder mehreren der Ansprüche 1–4, dadurch gekennzeichnet, dass für eine vorgegebene Zeitdauer oder eine vorgegebene Strecke vor dem Umschalten von der Phase konstanter Verzögerung auf die Phase abnehmender Verzögerung eine Führungsgrösse, die der die Bremskraft des Fahrzeuges regelnden Einrichtung zugeführt wird, durch Subtraktion eines vorgegebenen Wertes modifiziert wird, so dass die die Bremskraft regelnde Einrichtung einen Anreiz in Richtung «Bremse lösen» erhält.

**Claims**

1. Method of distance-dependent braking of rail vehicles, the vehicle speed being regulated according to a given function by feeding the difference between the actual vehicle speed and a desired speed determined from the given function to a device regulating the braking force of the vehicle, the given function having a distance-dependent phase of constant deceleration and a phase of decreasing deceleration, wherein the given function is distance-dependent during the phase of decreasing deceleration and wherein the given function ($v_{soll}=f(s)$) is so generated by specifying a fictitious time (TAB) that, first of all, the desired distance ($s_{soll} = f(TAB)$) covered from the start of braking is determined at the desired speed ($v_{soll} = f(TAB)$) that this desired distance is then compared with the distance actually covered ($s_{ist}$), that the fictitious time (TAB) is then modified as a function of this comparison and the desired distance determined again until the desired distance ($s_{soll} = f(TAB)$) agrees with the actual distance ($s_{ist}$) within given limits, and that the desired speed ($v_{soll} = f(s)$) is then determined as a function of the distance, using the fictitious time last modified (TAB).

2. Method as defined in Claim 1, wherein the fictitious time (TAB) is modified such that a constant small amount (DT/4) is added to, or subtracted from, the fictitious time (TAB) as a function of the comparison.

3. Method as defined in Claim 1 or 2, wherein the desired deceleration value used to determine the given function ($v_{soll} = f(s)$) is modified by a factor according to the difference between the vehicle speed and the target speed ($v_{ziel}$) in such a way that the desired deceleration value is small for a small difference than for a large difference.

4. Method as defined in Claims 1 to 3, wherein the desired deceleration value is linear to the target distance during the phase of decreasing deceleration.

5. Method as defined in Claims 1 to 4, wherein for a target distance which is smaller than a given value, the desired target speed ($v_{ziel}$) is used as the desired value for speed regulation.

6. Method as defined in Claim 5, wherein the given value represents a target distance of about 10 m.

7. Means for distance-dependent braking of rail vehicles, comprising a sensor for generating signals proportional to the vehicle speed, a computer for generating desired values for the vehicle speed, a device for providing a smooth transition in the desired speed upon approximation to the target speed, and a device regulating the braking force of the vehicle, wherein there is a further computer (14) for the desired value $v_{soll} = f(s)$), the said computer coming into action when a certain target distance ($s_{ziel}$–$s_{AB}$) has been reached, and containing the following items:

a computing circuit (15) which from a given quantity (TAB), produces, according to a fixed function, a desired value ($s_{soll} = f(TAB)$ for the desired distance covered since the start of braking; a comparator (17, 19, 20) which compares the desired value ($s_{soll} = f(TAB)$) with the distance actually covered ($s_{ist}$) and generates, as a function of this comparison, control signals serving lo activate modification circuits (21, 22) with which the given quantity (TAB) is modified, or which, if the desired value agrees with the actual value within a given range, activates a further computing circuit (23) which generates from the given quantity (TAB) a desired speed value ($v_{soll} = f(TAB)$).

8. Means as defined in Claim 7, wherein the modification circuits (21, 22) contain quantities ($\pm$DT/4) which are added in the computing circuit (15) to the given quantity (TAB), depending on whether and which modification circuit is activated.

9. Method as defined in one or more of Claims 1–4, wherein for a given time duration or a given distance before switching over from the phase of constant deceleration to the phase of decreasing deceleration, a reference quantity which is supplied to the device regulating the braking force of the vehicle is modified by subtracting a given value so that the device regulating the braking force is stimulated in the direction of «brake release».

## Revendications

1. Procédé de freinage sur une distance précise de véhicules guidés par rails par lequel la vitesse du véhicule est régulée d'après une fonction présélectionnée, dans lequel la différence entre la vitesse réelle du véhicule et une vitesse théorique déterminée d'après la fonction présélectionnée est transmise à un dispositif régulant la force de freinage du véhicule, la fonction présentant une phase de décélération constante dépendante de la distance parcourue et une phase de décélération dégressive, caractérisé par le fait que la fonction présélectionnée est dépendante de la distance parcourue pendant la phase de décélération dégressive et que la fonction présélectionnée ($V_{th} = f(s)$) est générée de telle façon à l'aide d'un temps fictif (TAB) choisi d'avance, que le chemin parcouru théorique ($S_{th} = f(TAB)$) à partir du début du freinage soit tout d'abord déterminé pour la vitesse théorique ($V_{th} = f(TAB)$), puis ce chemin parcouru théorique est comparé avec le chemin parcouru réel (S réel), puis le temps fictif (TAB) est alors modifié en fonction de cette comparaison et le chemin théorique à nouveau déterminé, jusqu'à ce que le chemin théorique ($S_{th} = f(TAB)$) corresponde avec le chemin réel (S réel) dans des limites fixées d'avance, puis la vitesse théorique ($V_{th} = f(S)$) est enfin déterminée en fonction du chemin parcouru à l'aide du temps fictif (TAB) résultant de la dernière modification.

2. Procédé d'après revendication 1, caractérisé par le fait que la modification du temps fictif (TAB) résulte, en fonction de la comparaison, de la soustraction ou de l'addition d'une petite valeur constante (DT/4) au temps fictif (TAB).

3. Procédé d'après revendications 1 et 2, caractérisé par le fait que la valeur théorique de décélération employée pour la détermination de la fonction présélectionnée ($V_{th} = f(S)$) est modifiée par un facteur, en fonction de la différence entre la vitesse du véhicule et la vitesse finale ($V_F$), de telle façon que la valeur théorique de décélération soit plus petite pour une petite différence que pour une grande.

4. Procédé d'après revendications 1 à 3, caractérisé par le fait que la valeur théorique de décélération varie linéairement avec la distance du but pendant la phase de décélération dégressive.

5. Procédé d'après revendications 1 à 4, caractérisé par le fait que, pour une distance du but inférieure à une valeur donnée, la vitesse finale ($V_F$) souhaitée est employée comme valeur théorique pour la régulation de la vitesse.

6. Procédé d'après revendication 5, caractérisé par le fait que la valeur choisie d'avance corresponde à une distance du but d'environ 10 m.

7. Dispositif pour le freinage sur une distance précise de véhicules guidés par rails avec un capteur générant un signal proportionnel à la vitesse du véhicule, avec un calculateur générant les valeurs théoriques de la vitesse du véhicule, avec un dispositif produisant une transition douce de la vitesse théorique à l'approche de la vitesse finale, et avec un dispositif régulant la force de freinage du véhicule, caractérisé par le fait qu'un calculateur supplémentaire (14) est prévu pour la valeur théorique ($V_{th} = f(S)$), qui entre en fonction à partir d'une certaine distance du but ($S_F$–$S_{AB}$) et qui contient les éléments suivants:

Un circuit de calcul (15) qui donne une valeur théorique ($S_{th} = f(TAB)$) du chemin théorique parcouru depuis le début du freinage d'après une fonction présélectionnée et une grandeur donnée (TAB); un comparateur (17, 19, 20) qui compare la valeur théorique ($S_{th}$ = f(TAB)) avec le chemin parcouru réel (S Réel) et engendre, en fonction de la comparaison, des signaux de commande qui actionnent les circuits modificateurs (21, 22) par lesquels la grandeur donnée (TAB) est modifiée, ou bien, lorsqu'il y a correspondance entre la valeur théorique et la valeur réelle à l'intérieur des limites fixées d'avance, active un circuit de calcul supplémentaire (23) qui engendre la valeur théorique ($V_{th}$ = f(TAB)) de la vitesse à partir de la grandeur donnée (TAB).

8. Dispositif d'après revendication 7, caractérisé par le fait que les circuits modificateurs (21, 22) comprennent des grandeurs ($\pm$DT/4) qui, en fonction du circuit modificateur qui est activé, sont ajoutées à la valeur donnée (TAB) dans le circuit de calcul (15).

9. Procédé d'après une ou plusieurs des revendications 1 à 4, caractérisé par le fait que, pour un intervalle de temps ou une distance donnée avant le passage de la phase de décélération constante à la phase de décélération dégressive, une grandeur de pilotage, qui est transmise au dispositif régulant la force de freinage du véhicule, est modifiée par la soustraction d'une valeur prédéterminée, de sorte que le dispositif régulant la force de freinage reçoive une impulsion en direction du desserrage du frein.

Fig. 1

Fig. 2

Fig. 3